# EUROPEAN PATENT SPECIFICATION

(11) **EP 4 084 127 B1**
(45) Date of publication and mention of the grant of the patent: **11.09.2024**
(21) Application number: 22161183.3
(22) Date of filing: 09.03.2022
(51) Int. Cl.: H01M 4/134, H01M 4/13, H01M 4/38, H01M 4/48, H01M 4/62

(54) **ELECTROCHEMICAL DEVICE AND ELECTRONIC EQUIPMENT**
ELEKTROCHEMISCHE VORRICHTUNG UND ELEKTRONISCHE AUSRÜSTUNG
DISPOSITIF ÉLECTROCHIMIQUE ET ÉQUIPEMENT ÉLECTRONIQUE

(30) Priority: 24.03.2021 CN 202110314924
(43) Date of publication of application: 02.11.2022
(73) Proprietor: Ningde Amperex Technology Ltd., Ningde City, Fujian 352100 (CN)
(72) Inventor: ZHANG, Zhao, Ningde City, Fujian Province, 352100 (CN)
(74) Representative: Icosa

(56) References cited:
- CN-A- 111 628 141
- KR-A- 20190 042 335
- US-A1- 2020 176 753

## Description

### FIELD

This application relates to the field of electrochemical technology, and particularly, to an electrochemical device and an electronic equipment.

### BACKGROUND

In recent years, with the rapid development of electronic products and electric vehicles, the safety performance and energy density requirements for electrochemical devices (such as lithium-ion batteries) have become higher and higher. Electrochemical devices generally comprise electrode plates. The electrode plates may occur expansion and lithium precipitation during their use, which reduces the safety performance of the electrochemical device. When reducing the risk of expansion and lithium precipitation of the electrode plates, sometimes the energy density of the electrochemical device is lost. An example of state of the art electrode plates can be found in patent literature CN 111 628 141 A.

### SUMMARY

The present application provides an electrochemical device in order to at least solve the technical problems existing in the prior art.

Some embodiments of the present application provide an electrochemical device comprising a first electrode plate. The first electrode plate comprises a current collector and an active material layer, and the active material layer is provided on the current collector. The active material layer comprises a first layer and a second layer, and the second layer is provided between the current collector and the first layer. The first layer comprises a first conductive agent, and the second layer comprises a second conductive agent. Among them, the mass percentage content of the first conductive agent is a1 based on the mass of the first layer, and the mass percentage content of the second conductive agent is a2 based on the mass of the second layer, and a1 and a2 satisfy: 1%≤a2-a1≤3%.

In some embodiments, 0.5%≤a1≤3%, and 1.5%≤a2≤5%.

In some embodiments, the first layer, the second layer and the current collector are stacked in the thickness direction of the first electrode plate. In some embodiments, the second layer is connected to the current collector.

In some embodiments, the porosity of the second layer is greater than that of the first layer.

In some embodiments, the porosity of the first layer is 20% to 25%, and the porosity of the second layer is greater than 25% and less than or equal to 35%.

In some embodiments, the first conductive agent and the second conductive agent each are independently selected from at least one of conductive carbon black, conductive graphite, carbon fiber, carbon nanotube, carbon nanowire, or graphene.

In some embodiments, the active material layer comprises a silicon material, and the silicon material includes at least one of silicon, silicon oxide, or silicon alloy.

In some embodiments, the active material layer further comprises a third layer, and the third layer is provided between the first layer and the second layer. In some embodiments, the first layer, the third layer, the second layer and the current collector are stacked in the thickness direction of the first electrode plate.

In some embodiments, the third layer comprises a third conductive agent. The mass percentage content of the third conductive agent is a3 based on the mass of the third layer, and a1 a2, and a3 satisfy: a1≤a3<a2.

In some embodiments, the first layer has a thickness of d1, the second layer has a thickness of d2, and l(d1-d2)/d1|≤5%.

The embodiments of the present application also provide an electronic equipment comprising any of electrochemical devices provided in the present application.

In some embodiments of the application, the first electrode plate is arranged as the first layer and the second layer, the second layer is close to the current collector and comprises the second conductive agent, the first layer is away from the current collector and comprises the first conductive agent, and controls the difference between the mass percentage content of the second conductive agent in the second layer and the mass percentage content of the first conductive agent in the first layer, thereby reducing the volume expansion of the electrochemical device during the cycle, facilitating to reduce the risk of ion precipitation, and also balancing the energy density of electrochemical devices.

### BRIEF DESCRIPTION OF THE DRAWINGS

The above and other features, advantages, and aspects of various embodiments of the present disclosure will become obvious with reference to the following particular implementations in conjunction with the accompanying drawings. Throughout the drawings, the same or similar reference numerals indicate the same or similar elements. It is understood that the drawings are schematic, and members and elements are not necessarily drawn to scale.
Fig. 1 is a schematic diagram of a first electrode plate according to an embodiment of the present disclosure.
Fig. 2 is a schematic diagram of another first electrode plate according to an embodiment of the present disclosure.
Fig. 3 is a schematic diagram of another first electrode plate according to an embodiment of the present disclosure.
Fig. 4 is a schematic diagram of another first electrode plate according to an embodiment of the present disclosure.

### DETAILED DESCRIPTION

The embodiments of the present application will be described in more detail below. Although some embodiments of the present application are shown, it is understood that the present application can be implemented in various forms and should not be construed as being limited to the embodiments set forth herein. To the contrary, these embodiments are provided for a more thorough and complete understanding of this application. It is understood that the embodiments of the present application are only used for exemplary purposes, and are not intended to limit the scope of the appended claims.

Electrochemical devices, such as lithium-ion batteries, are widely used in various fields. During the cycle of the electrochemical device, the positive electrode plate and the negative electrode plate will encounter the problem of volume expansion. The volume expansion of the positive electrode plate and the negative electrode plate will cause the safety performance to decrease, which may lead to the particles crush of the positive electrode material or the negative electrode material. This results in increased consumption of the liquid electrolyte and increased gas production.

Especially when silicon and silicon-based materials are used in the negative electrode plate, the volume expansion of silicon and silicon-based materials is particularly obvious during the cycle, which causes the particles of silicon and silicon-based materials to be crushed. This not only reduces the safety performance, but also easily causes the capacity to attenuate rapidly, and is easy to lithium precipitation.

Therefore, reduction of the volume expansion of the electrochemical device during the cycle is beneficial to improve the cycle performance and safety performance of the electrochemical device.

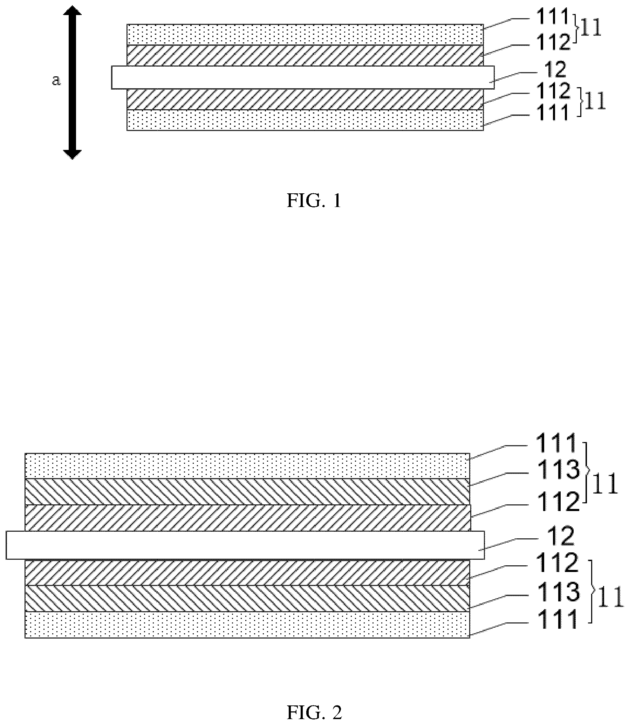

Some embodiments of the present application provide an electrochemical device comprising a first electrode plate. The first electrode plate may be a positive electrode plate of the electrochemical device or a negative electrode plate of the electrochemical device. Referring to Fig. 1, the first electrode plate comprises a current collector 12 and an active material layer 11. The current collector 12 can be, for example, a metal foil, and the metal foil can be, for example, a copper foil or an aluminum foil. The current collector 12 can also be made of other materials well-known in the art. In the case that the first electrode plate is a positive electrode, the active material layer 11 is a positive electrode active material layer, and in the case that the first electrode plate is a negative electrode, the active material layer 11 is a negative electrode active material layer.

It can be understood that, in this application, the active material layer refers to a layer including a material that can intercalate or deintercalate lithium ions.

The active material layer 11 is provided on the current collector 12, and the active material layer 11 may be provided on one or both sides of the current collector 12. The active material layer 11 comprises a first layer 111 and a second layer 112. The second layer 112 is provided between the current collector 12 and the first layer 111, that is, the first layer 111 is provided on the side of the second layer 112 away from the current collector 12. The first layer 111 comprises a first conductive agent, and the second layer 112 comprises a second conductive agent. The first conductive agent and the second conductive agent may be the same conductive agent or different conductive agents. In this application, the mass percentage content a1 of the first conductive agent in the first layer 111 and the mass percentage content a2 of the second conductive agent in the second layer 112 satisfy: 1%≤a2-a1≤3%.

In the application, the mass percentage content of the first conductive agent in the first layer 111 refers to the mass percentage content of the first conductive agent based on the mass of the first layer 111. The mass percentage content of the second conductive agent in the second layer 112 refers to the mass percentage content of the second conductive agent based on the mass of the second layer 112. The mass percentage content of the aforementioned conductive agent can be obtained by collecting multiple samples, testing the content of the conductive agent, and averaging.

In some embodiments, 1%≤a2-a1≤3%, so that the first electrode plate has a concentration gradient of the conductive agent in a direction perpendicular to the current collector 12. The direction indicated by the double arrow a in Fig. 1 is a direction perpendicular to the current collector 12 (that is, the thickness direction of the first electrode plate or the thickness direction of the current collector 12). The mass percentage content of the second conductive agent in the second layer 112 is greater than that of the first conductive agent in the first layer 111, and the kinetics of the second layer 112 is better than that of the first layer 111. Therefore, when the first electrode plate is embedded with ions, the ions will be embedded in the second layer 112 more quickly, and then the ions will preferentially be embedded in the second layer 112. The first layer 111 with a lower degree of intercalation of ions can then inhibit the expansion of the second layer 112, thereby reducing the expansion of the electrochemical device during the cycle. Furthermore, because ions are preferentially embedded in the second layer 112, the problem of ion precipitation due to accumulation of ions on the surface of the first electrode plate can be prevented. In the case of a2-a1<1, due to the insufficient difference between the mass percentage content of the first conductive agent and the mass percentage content of the second conductive layer, the effect of promoting preferential insertion of ions into the second layer 112 cannot be achieved. However, in the case of a2-a1>3%, although the difference in the concentration of the conductive agent increases, the improvement effect will not increase obviously. To the contrary, the addition of too much conductive agent in the second layer will cause the capacity of the electrochemical device to decrease, thereby reducing energy density. In summary, in some embodiments of the present application, controlling the difference between the mass percentage content of the second conductive agent in the second layer and the mass percentage content of the first conductive agent in the first layer, can reduce the volume expansion of the electrochemical device during the cycle, and facilitate to suppress the occurrence of ion precipitation (such as lithium precipitation), and also balance the energy density of the electrochemical device.

In some embodiments of the application, the mass percentage content of the first conductive agent in the first layer 111 is 0.5% to 3%, and the mass percentage content of the second conductive agent in the second layer 112 is 1.5% to 5%. In some embodiments of the application, if the mass percentage content of the first conductive agent and the second conductive agent is too low, the conductivity of the first electrode plate may decrease, which is adverse to cycle performance and rate performance. If the mass percentage content of the conductive agent and that of the second conductive agent are too high, it will affect the energy density of the first electrode plate.

In some embodiments of the application, the porosity of the second layer 112 is greater than that of the first layer 111. In some embodiments, the second layer with a higher porosity can provide more transport channels for ion transport. Therefore, the second layer 112 has a better ion conductivity than the first layer 111, and thus preferentially inserts ions. Since the second layer 112 preferentially inserts ions, the first layer 111 with less inserted ions can suppress expansion of the second layer 112. Furthermore, the larger porosity of the second layer 112 can buffer the stress generated in the second layer 112 during the expansion, prevent the active material layer from peeling off the current collector 12 of the first electrode plate, and improve the structural stability of the electrochemical device during cycling. The first layer 111 with a lower porosity can help increase the energy density. It can be seen that controlling the porosity of the second layer 112 to be greater than that of the first layer 111 can improve the structural stability and energy density of the electrochemical device during cycling.

In some embodiments of the application, the present application may also provide an electrochemical device comprising a first electrode plate. Continuing to refer to Fig. 1, the first electrode plate may be a positive electrode plate or a negative electrode plate. The first electrode plate comprises a current collector 12 and an active material layer 11 provided on the current collector. The active material layer 11 comprises a first layer 111 and a second layer 112 provided between the first layer 111 and the current collector 12, where the porosity of the second layer 112 is greater than that of the first layer 111. Based on the above-mentioned analysis, the electrochemical device thus arranged can improve the structural stability and energy density during cycling. The technical features of the electrochemical device in any of embodiments of this application can be applied to the electrochemical device provided in this embodiment, that is, the electrochemical device in this embodiment can be combined with the technical features of the electrochemical device in any one or two or more of the other embodiments. The technical solution obtained by such a combination should also be regarded as the technical solution of the present application.

In some embodiments of the present application, the porosity of the first layer 111 is 20% to 25%, and the porosity of the second layer 112 is greater than 25% and less than or equal to 35%. In some embodiments, when the porosity of the first layer 111 and the second layer 112 is too low, the buffering effect for expansion will be reduced, and it is adverse to the ion transport and infiltration of the liquid electrolyte. However, when the porosity of the first layer 111 and the second layer 112 is too high, the energy density of the electrochemical device may decrease.

In some embodiments of the application, the first conductive agent and the second conductive agent each are independently selected from at least one of conductive carbon black, conductive graphite, carbon fiber, carbon nanotube, carbon nanowire, or graphene. In some embodiments, the first conductive agent and the second conductive agent may be the same material, such as graphite materials; and the first conductive agent and the second conductive agent may also be different materials, wherein the conductivity of the second conductive agent may be higher than that of the first conductive agent, thereby promoting preferential insertion of ions into the second layer.

In some embodiments of the application, the active material layer 11 comprises a silicon material, and the silicon material includes at least one of silicon, silicon oxides, or silicon alloy. In some embodiments, the size of the silicon material may not be limited, and it may be either pure silicon material, or SiO₂, SiOₓ (x is 0.5 to 1.5). The silicon material has a high capacity per gram, and the use of silicon material is beneficial to increase the energy density of the electrochemical device, and the first electrode plate of the electrochemical device provided in this application fully considers the volume expansion during the cycle of silicon material, which can effectively suppress the volume expansion during the cycle of the silicon material, reduce the risk of ion precipitation and improve the circulation performance.

In some embodiments of the application, as shown in Fig. 2, the active material layer 11 further comprises a third layer 113, and the third layer 113 is provided between the first layer 111 and the second layer 112. In some embodiments, the third layer 113 being provided between the first layer 111 and the second layer 112 can buffer the volume difference of the first layer 111 and the second layer 112 due to the difference in ion insertion amount between the first layer 111 and the second layer 112, and reduce the internal stress in the entire active material layer 11.

In some embodiments of the application, the third layer 113 comprises a third conductive agent, and the mass percentage content a3 of the third conductive agent in the third layer 113 satisfies: a1≤a3<a2. In some embodiments, the mass percentage content of the conductive agent in the direction from the first layer 111, the third layer 113 to the second layer 112 gradually increases to form a concentration gradient, thereby promoting the transport of ions from the first layer 111 to the second layer 112 in this order, without excessively staying in the first layer 111 and the third layer 113.

In this application, the mass percentage content of the third conductive agent in the third layer 113 refers to the mass percentage content of the third conductive agent based on the mass of the third layer 113.

In some embodiments of the application, the active material layer may further comprise other layers provided between the first layer 111 and the second layer 112.

In some embodiments of the application, various layers of the active material layer 11 are stacked in sequence in the thickness direction of the first electrode plate.

In some embodiments of the application, the boundary between various layers of the active material layer 11 can be clearly distinguished.

In some embodiments of the application, various layers of the active material layer 11 may be interlaced with each other, that is, the thickness of the first layer 111 and the second layer 112 is not uniform in the thickness direction of the first electrode plate.

In some embodiments of the application, the boundary between various layers of the active material layer 11 may be fused with each other. It can be understood that when the first layer 111, the second layer 112, the third layer 113 and other possible layers include the same active material, the boundary between the various layers may not be obvious, that is, the active material layer 11 is uniform as a whole in the thickness direction of the first electrode plate. In some embodiments of the application, the relationship between the mass percentage content a2 of the conductive agent on the side of the active material layer close to the current collector and the mass percentage content a1 of the conductive agent on the side away from the current collector may satisfy: 1%≤a2-a1≤3%. In some embodiments of the application, the active material on the side of the active material layer close to the current collector, such as the side attached to the current collector can be collected, and the mass percentage content of the conductive agent in it is a2 based on the mass of that active material; the active material on the side of the active material layer away from the current collector is collected, and the mass percentage content of the conductive agent in it is a1 based on the mass of that active material, and a1 and a2 satisfy the above-mentioned relationship. In some embodiments of the application, the porosity of the active material layer on the side close to the current collector is greater than the porosity on the side away from the current collector.

In some embodiments of the application, various layer of the active material layer 11 may include the same active material, or different active materials.

In some embodiments of the application, as shown in Figs. 1 and 2, the second layer 112 may be attached to the current collector 12.

In some embodiments of the application, the first layer 111 may comprise a portion connected to the current collector 12. That is, the first layer 111 can cover the surface of the second layer 112 and the periphery of the second layer 112, which can further improve the expansion of the second layer 112.

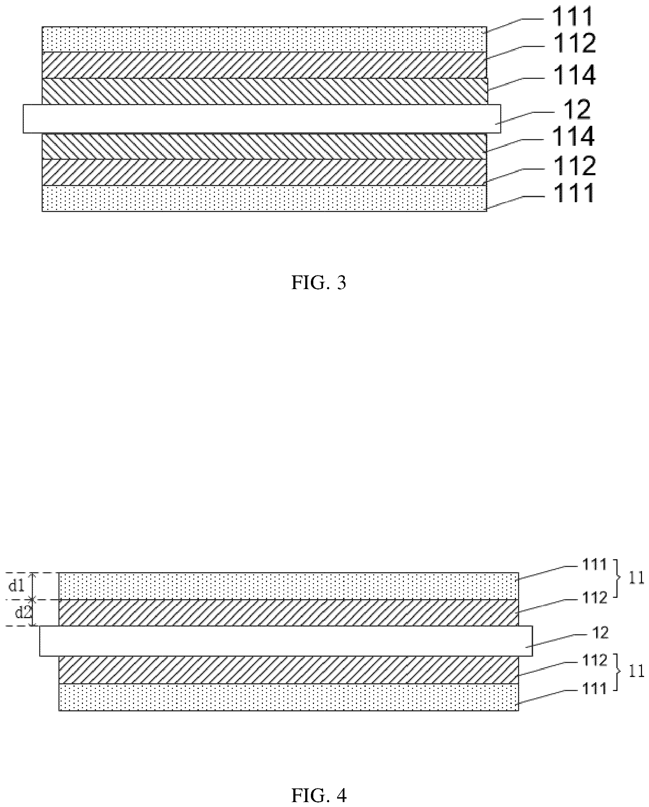

In some embodiments of the application, as shown in Fig. 3, the first electrode plate further comprises a conductive layer 114 provided between the second layer 112 and the current collector 12. In some embodiments of the application, the conductive layer 114 is connected to the current collector 12 and the second layer 112, respectively. In some embodiments of the application, the conductive layer 114 comprises a conductive agent and a binder.

In some embodiments of the application, as shown in Fig. 4, the first layer 111 has a thickness of d1, and the second layer 112 has a thickness of d2, where |(d1-d2)/d1|≤5%. In some embodiments of the application, the thicknesses of the first layer 111 and the second layer 112 are similar. If the thickness of the first layer 111 is too thicker than that of the second layer 112, then it may be difficult for ions to pass through the first layer 111 to reach the second layer 112, causing ions to accumulate in the first layer 111. If the first layer 111 is too thinner than the second layer 112, because of a higher mass percentage content of the second conductive agent in the second layer 112, it will be unfavorable for the energy density of the electrochemical device. Optionally, the thicknesses of the first layer 111 and the second layer 112 may be the same.

In some embodiments of the application, the active material layer comprises an active material, a conductive agent, and a binder; where the conductive agent includes a first conductive agent and a second conductive agent, and the mass ratio of the active material, the conductive agent, and the binder is (85 to 97.5): (0.5 to 5): (0.5 to 10). The binder may be polyacrylic acid, which has good adhesion.

In some embodiments of the application, an electrochemical device is provided. The electrochemical device may comprise an electrode assembly and a housing that contains the electrode assembly. The electrode assembly comprises a positive electrode plate, a negative electrode plate, and a separator provided between the positive electrode plate and the negative electrode plate. The electrochemical device may be a lithium ion-battery, and the lithium ion-battery may be a secondary battery (such as a lithium ion secondary battery), or a primary battery (such as a lithium primary battery, etc.), but not limited thereto. The electrode assembly may be either a laminated structure formed by stacking the positive electrode plate, the separator, and the negative electrode plate in this order, or a winding structure obtained by stacking the positive electrode plate, the separator, and the negative electrode plate in this order and then winding them. Among them, the separator is located between the positive electrode plate and the negative electrode plate for isolation. The first electrode plate may be a positive electrode plate or a negative electrode plate, preferably a negative electrode plate.

In some embodiments, the first layer and the second layer may be coated on the current collector by a double-layer coating. For example, the second layer may be coated on the current collector, and then the first layer may be coated on the side of the second layer away from the current collector.

In some embodiments, the multilayer structure of the active material layer may be fabricated by the above-mentioned method.

In some embodiments, the positive electrode plate includes a positive electrode material. For lithium-ion batteries, the positive electrode material may be selected from lithium cobalt oxides, lithium nickel oxides, lithium manganese oxides, lithium nickel manganese oxides, lithium nickel cobalt manganese oxides, lithium nickel cobalt aluminum oxides, transition metal phosphates, lithium iron phosphates, etc. However, the application is not limited to these materials, and other conventionally well-known materials that can be used as cathode materials for lithium-ion batteries can also be used. These positive electrode materials may be used alone or in combination of two or more. Preferably, the cathode material can be selected from one or more of LiCoO₂, LiNiO₂, LiMnO₂, LiMn₂O₄, LiNi _{1/3}Co_{1/3}Mn_{1/3}O₂(NCM₃₃₃), LiNi_{0.5}Co_{0.2}Mn_{0.3}O₂(NCM₅₂₃), LiNi_{0.6}Co_{0.2}Mn _{0.2}O₂(NCM₆₂₂), LiNi_{0.8}Co_{0.1}Mn_{0.1}O₂(NCM₈₁₁), LiNi_{0.85}Co_{0.15}Al_{0.05}O₂, LiFePO₄, and LiMnPO₄.

In some embodiments, the separator includes at least one of polyethylene, polypropylene, polyvinylidene fluoride, polyethylene terephthalate, polyimide, or aramid. For example, polyethylene includes at least one selected from high-density polyethylene, low-density polyethylene, or ultra-high molecular weight polyethylene. Particularly, as for polyethylene and polypropylene, they have a good effect on preventing short circuits, and can improve the stability of the battery through the shutdown effect. In some embodiments, the separator has a thickness within the range of about 5 µm to 500 µm.

In some embodiments, the surface of the separator may also comprise a porous layer, which is provided on at least one surface of the substrate of the separator. The porous layer may be a polymer layer or an inorganic layer, or a layer formed by a mixed polymer and an inorganic substance. For example, the inorganic layer comprises inorganic particles and a binder, and the inorganic particles are selected from at least one of alumina (Al₂O₃), silica (SiO₂), magnesium oxide (MgO), titanium oxide (TiO₂), hafnium dioxide (HfO₂), tin oxide (SnO₂), cerium dioxide (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide or barium sulfate.

In some embodiments, the pores of the separator have a diameter in the range of about 0.01 µm to 1 µm. The binder of the porous layer is selected from at least one of polyvinylidene fluoride, vinylidene fluoride-hexafluoropropylene copolymer, polyamide, polyacrylonitrile, polyacrylate, polyacrylic acid, polyacrylate salt, sodium carboxymethyl cellulose, polyvinyl pyrrolidone, polyvinyl ether, polymethyl methacrylate, polytetrafluoroethylene, or polyhexafluoropropylene. The porous layer on the surface of the separator can improve the heat resistance, oxidation resistance and liquid electrolyte infiltration performance of the separator, and enhance the adhesion between the separator and the electrode plate.

In some embodiments of the present application, the electrochemical device is a wound lithium-ion battery or a stacked lithium-ion battery.

In some embodiments, the electrochemical device may also comprise an electrolyte. The electrolyte may be one or more of a gel electrolyte, a solid electrolyte, and an liquid electrolyte comprising a lithium salt and a non-aqueous solvent. The lithium salt is selected from one or more of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB or lithium difluoroborate. For example, LiPF₆ is selected for lithium salt because it can give high ionic conductivity and improve cycle characteristics.

The non-aqueous solvent may be a carbonate compound, a carboxylate compound, an ether compound, other organic solvents, or a combination thereof. The carbonate compound may be a chain carbonate compound, a cyclic carbonate compound, a fluorocarbonate compound, or a combination thereof.

Examples of the chain carbonate compounds are diethyl carbonate (DEC), dimethyl carbonate (DMC), dipropyl carbonate (DPC), methyl propyl carbonate (MPC), ethylene propyl carbonate (EPC), methyl ethyl carbonate (MEC) and combinations thereof. Examples of the cyclic carbonate compounds are ethylene carbonate (EC), propylene carbonate (PC), butylene carbonate (BC), vinyl ethylene carbonate (VEC), or a combination thereof. Examples of the fluorocarbonate compounds are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

Examples of the carboxylate compounds are methyl acetate, ethyl acetate, N-propyl acetate, tert-butyl acetate, methyl propionate, ethyl propionate, propyl propionate, γ-butyrolactone, decanolide, valerolactone, mevalonolactone, caprolactone, methyl formate, or a combination thereof.

Examples of the ether compounds are dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

Examples of the other organic solvents are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, and phosphate esters or combinations thereof.

The embodiments of the present application also provide an electronic equipment including the above-mentioned electrochemical device. The electronic equipment of the embodiment of the application is not particularly limited, and it can be used in any electronic equipment known in the prior art. In some embodiments, electronic equipments may include, but are not limited to, notebook computers, pen-input computers, mobile computers, e-book players, portable phones, portable fax machines, portable photocopiers, portable printers, headsets, Video recorders, LCD TVs, portable cleaners, portable CD players, MiniDiscs, transceivers, electronic notebooks, calculators, memory cards, portable recorders, radios, backup power supplies, motors, automobiles, motorcycles, assisted bicycles, bicycles, lighting appliance, toys, game consoles, clocks and watches, power tools, flashlights, cameras and large household storage batteries, etc.

Some specific examples are listed below to better explain the present application, in which a lithium-ion battery is used as an example. In order to facilitate description of the technical effects of the present application, the difference between the various examples is only that the negative electrode active material layer on the negative electrode plate is different. The following examples are only used for schematic illustration, and should not limit the scope of the appended claims.

### EXAMPLES

### Example 1

### (1) Preparation of the positive electrode

Lithium cobaltate, carbon nanotubes, Super P (conductive carbon black) and polyvinylidene fluoride were mixed at a mass ratio of 96.2%: 0.5%: 0.3%: 3.0%, and then N-methyl pyrrolidone was added to dissolve them. After mixing well, the obtained mixture was evenly coated on the Al foil, and then dried, cold pressed according to a certain compaction density, slit, to obtain a positive electrode plate.

### (2) Preparation of the negative electrode

A silicon-based material, conductive carbon black and a binder were mixed, where the mass percentage of conductive carbon black was 2%, the mass percentage of the silicon-based material was 95%, the binder was styrene-butadiene rubber and its mass percentage was 3%. The deionized water was added, and slurry 1 was obtained under the action of a vacuum mixer. The slurry 1 was uniformly coated on the copper foil to form a second layer. The silicon-based materials, the conductive agent and the binder were then mixed, where the mass percentage of the conductive agent was 0.5%, the mass percentage of the binder was 3%, and the mass percentage of the silicon-based material was 96.5%. The deionized water was added, and slurry 2 was obtained under the action of a vacuum mixer. The slurry 2 was coated on the side of the second layer away from the copper foil to form a first layer. The thicknesses of the first layer and the second layer were the same. After drying, cold pressing, and slitting, a negative electrode plate was obtained.

### (3) Preparation of the liquid electrolyte

Ethylene carbonate (EC), ethyl methyl carbonate (EMC), and diethyl carbonate (DEC) were mixed at a volume ratio of 1:1:1 in a glove box under an atmosphere of dry argon to obtain an organic solvent. The fully dried lithium salt LiPF₆ was then dissolved in the mixed organic solvent to prepare an liquid electrolyte with a concentration of 1 mol/L.

### (4) Preparation of the separator

The separator of polyethylene was used.

### (5) Preparation of the lithium-ion battery

The positive electrode plate, the separator, and the negative electrode plate were stacked in this order to produce a laminate, in which the separator was allowed to locate between the positive electrode plate and the negative electrode plate for isolation. The laminate was then wound to obtain the electrode assembly. The electrode assembly was placed in the outer packaging foil aluminum plastic film after welding the tabs to the assembly. The prepared liquid electrolyte was injected into the dried electrode assembly, and a lithium-ion battery (or called a battery) was obtained after the steps of vacuum packaging, standing, forming, shaping, and capacity testing.

The difference between Examples 2 to 20 and Example 1 lies in at least one of the content of the conductive agent in the first layer, the content of the conductive agent in the second layer, the porosity of the first layer, and the porosity of the second layer; meanwhile, the mass ratio of the negative electrode material in each layer is maintained unchanged.

The testing methods of various parameters of the present application are described below.

### 1. Lithium precipitation from the negative electrode plate:

A lithium-ion battery was charged to 4.45 V with a constant current of X (X=0.5, 0.7, 0.9, 1.0, 1.2, 1.5, 1.7, 2.0) C at 25°C. The battery was then charged to a current of 0.05 C with a constant voltage of 4.45 V, and remained still for 2 min. The battery was then discharged to 3.0 V with a constant current of 1.0 C, and remained still for 2 min. Take this as a cycle and repeat 10 cycles. The lithium-ion battery was disassembled to obtain the electrode assembly, and the electrode assembly was spread out. If any area of ≥2 mm² in the negative electrode plate was found to occur lithium precipitation, it was judged as the lithium precipitation of the negative electrode plate, and the unit was C.

### 2. Battery capacity test:

At 25°C, a lithium-ion battery was charged to 4.45 V with a constant current of 0.2 C. The battery was then charged to a current of 0.05 C with a constant voltage of 4.45 V, and remained still for 5 min. The battery was then discharged at a constant current of 1.0 C to different cut-off voltages X (X=2.5, 3.0, 3.2, 3.4) V, and remained still for 2 minutes. The discharge capacity at this time was taken as the battery capacity.

### 3. Cycle test:

At 25°C, the lithium-ion battery was charged to 4.45 V with a constant current of 0.5 C. The battery was then charged to a current of 0.05 C with a constant voltage of 4.45 V, and remained still for 5 min. The battery was then discharged to different cut-off voltages X (X=2.5, 3.0, 3.2, 3.4) V at a constant current of 1.0 C, and remained still for 2 min. Take this as a cycle, and according to the above cycle, cycle until the battery capacity attenuates to 80% of the capacity at the first cycle. In addition, the PPG soft-pack battery thickness gauge (Manufacturer: Yinghaoda; Model: PPG1000) was used to measure the overall thickness of the battery at 500 gf every 100 cycles. The percent increase of the overall thickness at this time compared to the initial overall thickness was used as the cycle expansion rate P. P= (PPG1/PPG0-1) × 100%, PPG1 was the overall thickness of the battery during the cycle, PPG0 was the overall thickness of the initial battery

### 4. Porosity test:

The test was carried out in accordance with the national standard "Determination of apparent density, true density and porosity of iron tore" (GB/T 24586-2009), the gas displacement method was used. The percentage of the pore volume of the sample to the total area, P=(V-V0) /V×100%, V0: true volume, V: apparent volume.

The parameters of the negative active material layer (first layer and second layer) on the negative electrode plate in Examples 1 to 20 and the test results of the lithium-ion battery is shown in Table 1.

**Table 1.**

| Items | Conductive agent content of the first layer | Conductive agent content of the second layer | Porosity of the first layer | Porosity of the second layer | Cycle expansion rate/500 cycles | Battery capacity /mAh | Level of lithium precipitation/C | Capacity retention rate/500 cycles |
|---|---|---|---|---|---|---|---|---|
| Ex. 1 | 0.5% | 2.0% | 25% | 25% | 12% | 2184 | 0.9 | 85% |
| Ex. 2 | 0.5% | 3.0% | 25% | 25% | 11% | 2173 | 1.0 | 86% |
| Ex. 3 | 1.0% | 2.5% | 25% | 25% | 12% | 2173 | 1.0 | 86% |
| Ex. 4 | 1.5% | 3.0% | 25% | 25% | 11% | 2162 | 1.2 | 87% |
| Ex. 5 | 2.0% | 3.5% | 25% | 25% | 10% | 2151 | 1.5 | 88% |
| Ex. 6 | 3.0% | 4.0% | 25% | 25% | 10% | 2134 | 1.7 | 90% |
| Ex. 7 | 0.3% | 1.5% | 25% | 25% | 13% | 2100 | 0.5 | 77% |
| Ex. 8 | 0.5% | 1.0% | 25% | 25% | 15% | 2195 | 0.7 | 83% |
| Ex. 9 | 3.5% | 3.5% | 25% | 25% | 15% | 2134 | 2.0 | 84% |
| Ex. 10 | 0.5% | 5.5% | 25% | 25% | 11% | 2145 | 1.5 | 85% |
| Ex. 11 | 1.5% | 3.0% | 20% | 30% | 9% | 2162 | 1.7 | 87% |
| Ex. 12 | 1.5% | 3.0% | 25% | 30% | 10% | 2107 | 1.5 | 87% |
| Ex. 13 | 1.5% | 3.0% | 18% | 25% | 10% | 1987 | 1.0 | 85% |
| Ex. 14 | 1.5% | 3.0% | 20% | 22% | 9% | 1949 | 1.0 | 85% |
| Ex. 15 | 1.5% | 3.0% | 27% | 30% | 10% | 2008 | 1.5 | 83% |
| Ex. 16 | 1.5% | 3.0% | 25% | 37% | 9% | 2087 | 1.5 | 81% |
| Ex. 17 | 0.5% | 0.5% | 25% | 25% | 15% | 2200 | 0.7 | 82% |
| Ex. 18 | 0.5% | 1.5% | 25% | 25% | 13% | 2189 | 0.9 | 84% |
| Ex. 19 | 0.5% | 0.5% | 25% | 30% | 13% | 2145 | 0.9 | 82% |
| Ex. 20 | 0.5% | 1.5% | 25% | 30% | 9% | 2134 | 1.2 | 84% |

| | | | | | | | | |
|---|---|---|---|---|---|---|---|---|
| Note: The content in Table 1 is the mass percentage content. | | | | | | | | |

With reference to Table 1. By comparing Examples 17, 8, 18, 1 and 2, it can be seen that when the porosity of the first layer, the porosity of the second layer and the mass percentage content of the conductive agent in the first layer remain unchanged, in the case that the difference between the mass percentage content of the conductive agent in the second layer and the mass percentage content of the conductive agent in the first layer is greater than 1%, as the mass percentage content of the conductive agent in the second layer increases, the cycle expansion rate gradually decreases, and the level of lithium precipitation gradually increases, the cycle capacity retention rate increases, and the capacity is slightly lost.

By comparing Examples 1 to 6, it can be found that the difference in the mass percentage content of the conductive agent between the second layer and the first layer has an effect on the cycle expansion, the battery capacity and the level of lithium precipitation. When the difference in the mass percentage content of the conductive agent between the second layer and the first layer is grearer than or equal to 1%, the cycle expansion can be improved, it demonstrates that the second layer will preferentially insert lithium so as to inhibit the cycle expansion. Furthermore, as the content of the conductive agent increases, cycle expansion, the level of lithium precipitation and 500-cycle capacity retention rate have been improved.

By comparing Examples 2 and 10, it can be seen that when the difference in the mass percentage content of the conductive agent between the second layer and the first layer is more than 3%, although the level of lithium precipitation rises, the cycle expansion rate no longer decreases, and the cycle capacity retention rate begins to decrease.

By comparing Examples 18 and 7, when the mass percentage content of the conductive agent in the first layer is too low (<0.5%), the battery capacity and the 500-cycle cycle capacity retention rate deteriorate seriously. This is because the conductivity of the first layer is insufficient, so that the function of battery capacity is affected. Moreover, by comparing Examples 18 and 8, it can be found that when the mass percentage content of the conductive agent in the second layer is too low (<1.5%), the difference in the mass percentage content of the conductive agent between the first layer and the second layer is too small, leading to no significant improvement in the battery expansion. This is because the conductivity of the second layer is insufficient to promote the insertion of lithium ions into the second layer.

By comparing Examples 5 and 9 and Examples 2 and 10, it can be found that when the content of the conductive agent in the first layer is too high (>3%), the excess conductive agent has no obvious improvement effect, and the battery expansion is not improved. When the content of the conductive agent in the second layer is too high (>5%, the difference is greater than 3%), the battery expansion has no more improvement.

After balancing the improvement effect on battery expansion and the battery capacity loss, the conductive agent content of Example 4 is selected as the basis of Examples 11 to 16.

By comparing Examples 4, 11 and 12, it can be found that keeping the mass percentage contents of the conductive agents in the first and second layers unchanged, and changing the porosity of the surface layer and non-surface layer will affect the cycle expansion, the battery capacity and the level of lithium precipitation. Among them, the cyclic expansion is minimum when the porosity of the first layer is 20% and the porosity of the second layer is 30%. This is because the difference in porosity between the first layer and the second layer will allow the second layer to have more ion channels and be easier to insert lithium, thereby improving the battery cycle expansion.

By comparing Examples 4 and 13 and Examples 11 and 14, it can be found that when the porosity of the first layer is too low (<20%), or the porosity of the second layer is too low (<25%), the battery capacity and the level of lithium precipitation deteriorate. This is because a smaller porosity will reduce the ion channels, leading to a decrease in battery capacity.

By comparing Examples 11 and 15 and Examples 12 and 16, it can be found that when the porosity of the first layer is too high (>25%), or the porosity of the second layer is too high (<25%), the battery capacity deteriorates. This is because too high porosity reduces the contact between active materials, leading to a decrease in battery capacity.

Although the present subject matter has been described in a language specific to structural features and/or logical actions of the method, it is understood that the subject matter defined in the appended claims is not necessarily limited to the particular features or actions described above. To the contrary, the particular features and actions described above are merely exemplary forms of implementing the claims.

## Claims

1. An electrochemical device, comprising a first electrode plate, the first electrode plate comprises:
a current collector; and
an active material layer provided on the current collector, the active material layer comprises a first layer and a second layer, the second layer is provided between the current collector and the first layer, the first layer comprises a first conductive agent, and the second layer comprises a second conductive agent;
wherein, 1%≤a2-a1≤3%, al is a mass percentage content of the first conductive agent based on the mass of the first layer, a2 is a mass percentage content of the second conductive agent based on the mass of the second layer.

2. The electrochemical device of claim **1,** wherein 0.5%≤a1≤3% and 1.5%≤a2≤5%.

3. The electrochemical device of claim **1,** wherein a porosity of the second layer is greater than that of the first layer, the porosity being measured using the gas displacement method.

4. The electrochemical device of claim **1,** wherein the porosity of the first layer is 20% to 25%, and the porosity of the second layer is greater than 25% and less than or equal to 35%, the porosity being measured using the gas displacement method.

5. The electrochemical device of claim **1,** wherein the first conductive agent and the second conductive agent each are independently selected from at least one of conductive carbon black, conductive graphite, carbon fiber, carbon nanotube, carbon nanowire, or graphene.

6. The electrochemical device of claim **1,** wherein the active material layer comprises a silicon material, and the silicon material includes at least one of silicon, silicon oxide, or silicon alloy.

7. The electrochemical device of claim **1,** wherein the active material layer further comprises a third layer provided between the first layer and the second layer.

8. The electrochemical device of claim **7,** wherein the third layer comprises a third conductive agent, a mass percentage content of the third conductive agent based on the mass of the third layer is a3, and a1≤a3<a2.

9. The electrochemical device of claim **1,** wherein the first layer has a thickness of d1, the second layer has a thickness of d2, and |(d1-d2)/d1|≤5%.

10. The electrochemical device of claim **1,** wherein the first layer, the second layer, and the current collector are stacked in a thickness direction of the first electrode plate.

11. The electrochemical device of claim **10,** wherein the second layer is in contact with the current collector.

12. An electronic equipment comprising the electrochemical device according to any one of claims **1** to **11.**

## Patentansprüche

1. Elektrochemische Vorrichtung, die eine erste Elektrodenplatte umfasst, wobei die erste Elektrodenplatte umfasst:
einen Stromkollektor; und
eine Schicht aus aktivem Material, die auf dem Stromkollektor vorgesehen ist, wobei die Schicht aus aktivem Material eine erste Schicht und eine zweite Schicht umfasst, die zweite Schicht zwischen dem Stromkollektor und der ersten Schicht vorgesehen ist, die erste Schicht ein erstes leitfähiges Mittel umfasst und die zweite Schicht ein zweites leitfähiges Mittel umfasst;
wobei 1 % ≤ a2-a1 ≤ 3 %, a1 ein prozentualer Massenanteil des ersten leitfähigen Mittels bezogen auf die Masse der ersten Schicht ist, a2 ein prozentualer Massenanteil des zweiten leitfähigen Mittels bezogen auf die Masse der zweiten Schicht ist.

2. Elektrochemische Vorrichtung nach Anspruch **1,** wobei 0,5 % ≤ a1 ≤ 3 % und 1,5 % ≤ a2 ≤ 5 %.

3. Elektrochemische Vorrichtung nach Anspruch **1,** wobei eine Porosität der zweiten Schicht größer ist als die der ersten Schicht, wobei die Porosität unter Verwendung des Gasverdrängungsverfahrens gemessen wird.

4. Elektrochemische Vorrichtung nach Anspruch **1,** wobei die Porosität der ersten Schicht 20 % bis 25 % beträgt und die Porosität der zweiten Schicht größer als 25 % und kleiner als oder gleich 35 % ist, wobei die Porosität unter Verwendung des Gasverdrängungsverfahrens gemessen wird.

5. Elektrochemische Vorrichtung nach Anspruch **1,** wobei das erste leitfähige Mittel und das zweite leitfähige Mittel jeweils unabhängig ausgewählt sind aus mindestens einem von leitfähigem Ruß, leitfähigem Graphit, Kohlenstofffaser, Kohlenstoffnanoröhre, Kohlenstoffnanodraht oder Graphen.

6. Elektrochemische Vorrichtung nach Anspruch **1,** wobei die Schicht aus aktivem Material ein Siliziummaterial umfasst und das Siliziummaterial mindestens eines von Silizium, Siliziumoxid oder Siliziumlegierung beinhaltet.

7. Elektrochemische Vorrichtung nach Anspruch **1,** wobei die Schicht aus aktivem Material weiter eine dritte Schicht umfasst, die zwischen der ersten Schicht und der zweiten Schicht vorgesehen ist.

8. Elektrochemische Vorrichtung nach Anspruch **7,** wobei die dritte Schicht ein drittes leitfähiges Mittel umfasst, ein prozentualer Massenanteil des dritten leitfähigen Mittels, bezogen auf die Masse der dritten Schicht, a3 ist und a1 ≤ a3 < a2.

9. Elektrochemische Vorrichtung nach Anspruch **1,** wobei die erste Schicht eine Dicke d1 aufweist, die zweite Schicht eine Dicke d2 aufweist, und |(d1-d2)/d1| ≤ 5 %.

10. Elektrochemische Vorrichtung nach Anspruch **1,** wobei die erste Schicht, die zweite Schicht und der Stromkollektor in einer Dickenrichtung der ersten Elektrodenplatte gestapelt sind.

11. Elektrochemische Vorrichtung nach Anspruch **10,** wobei die zweite Schicht mit dem Stromkollektor in Kontakt steht.

12. Elektronisches Gerät, das die elektrochemische Vorrichtung nach einem der Ansprüche **1** bis **11** umfasst.

## Revendications

1. Dispositif électrochimique, comprenant une première plaque d'électrode, la première plaque d'électrode comprend :
un collecteur de courant ; et
une couche de matériau actif disposée sur le collecteur de courant, la couche de matériau actif comprend une première couche et une seconde couche, la seconde couche est disposée entre le collecteur de courant et la première couche, la première couche comprend un premier agent conducteur, et la seconde couche comprend un deuxième agent conducteur ;
dans lequel 1 % ≤ a2-a1 ≤ 3 %, a1 est une teneur en pourcentage massique du premier agent conducteur sur la base de la masse de la première couche, a2 est une teneur en pourcentage massique du deuxième agent conducteur sur la base de la masse de la deuxième couche.

2. Dispositif électrochimique selon la revendication **1,** dans lequel 0,5 % ≤ a1 ≤ 3 % et 1,5 % ≤ a2 ≤ 5 %.

3. Dispositif électrochimique selon la revendication **1,** dans lequel la porosité de la seconde couche est supérieure à celle de la première couche, la porosité étant mesurée à l'aide de la méthode de déplacement de gaz.

4. Dispositif électrochimique selon la revendication **1,** dans lequel la porosité de la première couche est de 20 % à 25 %, et la porosité de la seconde couche est supérieure à 25 % et inférieure ou égale à 35 %, la porosité étant mesurée à l'aide de la méthode de déplacement de gaz.

5. Dispositif électrochimique selon la revendication **1,** dans lequel le premier agent conducteur et le deuxième agent conducteur sont chacun indépendamment choisis parmi au moins le noir de carbone conducteur, le graphite conducteur, la fibre de carbone, le nanotube de carbone, le nanofil de carbone ou le graphène.

6. Dispositif électrochimique selon la revendication **1,** dans lequel la couche de matériau actif comprend un matériau à base de silicium, et le matériau à base de silicium comprend au moins un parmi le silicium, l'oxyde de silicium ou un alliage de silicium.

7. Dispositif électrochimique selon la revendication **1,** dans lequel la couche de matériau actif comprend en outre une troisième couche disposée entre la première couche et la deuxième couche.

8. Dispositif électrochimique selon la revendication **7,** dans lequel la troisième couche comprend un troisième agent conducteur, une teneur en pourcentage massique du troisième agent conducteur basé sur la masse de la troisième couche est a3, et a1≤a3<a2.

9. Dispositif électrochimique selon la revendication **1,** dans lequel la première couche a une épaisseur de d1, la seconde couche a une épaisseur de d2 et |(d1-d2)/d1|≤5 %.

10. Dispositif électrochimique selon la revendication **1,** dans lequel la première couche, la seconde couche et le collecteur de courant sont empilés dans le sens de l'épaisseur de la première plaque d'électrode.

11. Dispositif électrochimique selon la revendication **10,** dans lequel la seconde couche est en contact avec le collecteur de courant.

12. Équipement électronique comprenant le dispositif électrochimique selon l'une quelconque des revendications **1** à **11.**
